# EUROPÄISCHE PATENTSCHRIFT

(11) **EP 2 357 504 B1**
(45) Veröffentlichungstag und Bekanntmachung des Hinweises auf die Patenterteilung: **07.12.2016**
(21) Anmeldenummer: 11151787.6
(22) Anmeldetag: 24.01.2011
(51) Int. Cl.: G02B 7/182, B23K 26/06

(54) **Vorrichtung zum Laserschutz mit einem kraftentkoppelten Laserschutzgehäuse**
Device for laser protection with a force-decoupled laser protection housing
Dispositif de protection laser doté d'un boîtier de protection laser avec découplage des forces

(30) Priorität: 25.01.2010 DE 102010005631
(43) Veröffentlichungstag der Anmeldung: 17.08.2011
(73) Patentinhaber: Leica Microsystems CMS GmbH, 35578 Wetzlar (DE)
(72) Erfinder: Seifert, Roland, 69115 Heidelberg (DE)
(74) Vertreter: Schaumburg und Partner Patentanwälte mbB

(56) Entgegenhaltungen:
- EP-A1- 1 340 585
- EP-A2- 0 477 458
- US-A1- 2005 047 450

## Beschreibung

Die Erfindung betrifft eine Vorrichtung zum Laserschutz. Die Vorrichtung umfasst eine Halterung die ein optisches Element hält, und einen Sockel, der die Halterung hält. ein zugehöriges Laserschutzgehäuse ist im Wesentlichen lichtdicht ausgebildet und mit dem Sockel gekoppelt.

Laser finden in den unterschiedlichsten Bereichen der Technik ihre Anwendung. Die von den Lasern erzeugten Laserstrahlen werden beispielsweise vom Laser zu externen Baueinheiten umgelenkt, kollimiert, fokussiert und/oder aufgefächert. Zum Umlenken eines Laserstrahls ist es bekannt, den Laserstrahl auf einen Umlenkspiegel zu richten. Zum Kollimieren, Fokussieren bzw. Auffächern ist es bekannt den Laserstrahl mit Hilfe einer oder mehrerer Linsen zu beeinflussen. Eine Ausrichtung des verwendeten optischen Elements bestimmt den Strahlverlauf und/oder die Strahlform des umgelenkten bzw. beeinflussten Laserstrahls. Da die Laserstrahlen teilweise derart hohe Energien besitzen, dass sie bei Menschen schwere gesundheitliche Schäden verursachen können, ist es wichtig, die Menschen in der Umgebung der Laser, der Laserstrahlen und der mit den Laserstrahlen versorgten externen Baueinheiten vor den Laserstrahlen zu schützen. Hierzu ist es bekannt, ein optisches Element derart mit einem Laserschutzgehäuse zu versehen, dass die auf das entsprechende optische Element gerichteten Laserstrahlen gegenüber der Umgebung des optischen Elements abgeschirmt sind.

Die die Laserstrahlen umlenkenden oder beeinflussenden Bauteile, insbesondere der Umlenkspiegel oder die Linse, müssen häufig sehr präzise justiert sein. Schon geringste Beeinflussungen des optischen Elements, beispielsweise durch äußere Krafteinwirkung oder durch Temperaturveränderungen, können zu einer Dejustage des optischen Elements und zu einer Veränderung des Laserstrahlverlaufs oder der Laserstrahlform führen. Bei einem mit dem Laserschutzgehäuse geschützten optischen Element, kann eine Krafteinwirkung auf das Laserschutzgehäuse zu einer Dejustage des optischen Elements führen. Daher ist es bekannt, das Laserschutzgehäuse berührungsfrei zu dem durch das Laserschutzgehäuse geschützten optischen Element anzuordnen. Aufgrund der Berührungsfreiheit können sich jedoch Zwischenräume zwischen dem das optische Element tragenden Bauteilen und dem Laserschutzgehäuse ergeben. Die Laserstrahlung kann durch diese Zwischenräume dringen und so zu einer Gesundheitsgefahr werden. Darüber hinaus ist es aufwendig, das durch das Laserschutzgehäuse geschützte optische Element präzise zu justieren und/oder auf einem optischen Tisch zu montieren.

Die US 2005 / 047 450 A1 offenbart eine Vorrichtung zum Laserschutz, bei der der Laserstrahl innerhalb von Röhren geführt ist. Diese sind an Haltevorrichtungen für optische Elemente angeflanscht. Weitere optische Elemente können in die Röhren eingebracht werden.

In EP 1 340 585 A1 ist eine Vorrichtung zum Laserbeschriften beschrieben. Der Laserstrahl wird in einem Röhrensystem geführt, das an den Gelenken Spiegel umfasst, mit denen der Laserstrahl abgelenkt wird.

Die EP 0 477 458 A2 beschreibt eine Vorrichtung zum Laserschutz mit einem Laserschutzgehäuse, das mit einem Sockel fest verschraubt ist. Lösbar am Sockel ist eine Halterung mit einem optischen Element befestigt.

Aufgabe der Erfindung ist es, eine Vorrichtung zum Laserschutz zu schaffen, die zu einem Schutz des optischen Elements vor äußeren Einwirkungen und zu einem Schutz der Umgebung vor der mit Hilfe des optischen Elements umgelenkten und/oder beeinflussten Laserstrahlung beiträgt.

Die Aufgabe wird gelöst durch die Merkmale des Anspruchs 1. Vorteilhafte Ausgestaltungen sind in den Unteransprüchen angegeben.

Die Erfindung zeichnet sich dadurch aus, dass das Laserschutzgehäuse über ein flexibles Element so mit dem Sockel gekoppelt ist, dass das Laserschutzgehäuse relativ zu dem Sockel verkippbar ist, wobei die Flexibilität des flexiblen Elements aufgrund der Geometrie des flexiblen Elements gegeben ist, und wobei der Trägerkörper, das flexible Element und der Sockel einstückig ausgebildet sind.

Die Kopplung des Laserschutzgehäuses mit dem Sockel über das flexible Element ermöglicht, das Laserschutzgehäuse lichtdicht mit dem Sockel zu verbinden und dennoch eine äußere Einwirkung, die auf das Laserschutzgehäuse wirkt, nicht ungedämpft auf den Sockel und damit z.B. auf die Spiegelhalterung, die den Umlenkspiegel hält, zu übertragen. Das heißt, dass das Laserschutzgehäuse von dem optischen Element kraftentkoppelt ist. Die äußere Einwirkung kann beispielsweise eine mechanische Krafteinwirkung oder eine thermische Temperatureinwirkung sein. Das optische Element umfasst beispielsweise einen Umlenkspiegel und/oder eine oder mehrere Linsen. Das Laserschutzgehäuse ist im Wesentlichen lichtdicht ausgebildet, was bedeutet, dass das Laserschutzgehäuse bis auf Öffnungen zur Montage des Sockels, des optischen Elements oder zur Strahlführung hin zu dem optischen Element lichtdicht ausgebildet ist. Das Laserschutzgehäuse umfasst einen Trägerkörper und eine von dem Trägerkörper gehaltenen Laserschutzabdeckung, wobei der Trägerkörper, das flexible Element und der Sockel einstückig ausgebildet sind. Dies trägt dazu bei, dass das Laserschutzgehäuse auf eine besonders einfache Weise herstellbar ist.

Die Flexibilität des flexiblen Elements ist aufgrund der Geometrie des flexiblen Elements gegeben. Insbesondere ist das flexible Element im Querschnitt wellenförmig und/oder blattartig ausgebildet.

In einer vorteilhaften Ausgestaltung ist die Flexibilität des flexiblen Elements aufgrund des Materials des flexiblen Elements gegeben. Insbesondere umfasst das flexible Element Kunststoff und/oder Gummi.

Zur einfachen Montage der Vorrichtung und zur einfachen Justage des optischen Elements ist es vorteilhaft, wenn eine vertikale Position der Laserschutzabdeckung im Bezug auf den Sockel durch ein Stellrad vorgebbar ist und/oder das Laserschutzgehäuse einen abnehmbaren Deckel umfasst. Der Deckel ermöglicht den Zugriff von oben in das Laserschutzgehäuse und somit ein Verstellen der Halterung, die vorzugsweise in vertikaler Richtung bewegbar mit dem Sockel gekoppelt ist.

Ausführungsbeispiele der Erfindung sind anhand von schematischen Zeichnungen näher erläutert.

Es zeigen:
- Figur 1: eine perspektivische Darstellung einer Vorrichtung zum Laserschutz,
- Figur 2: eine perspektivische Schnittdarstellung der Vorrichtung,
- Figur 3: eine Schnittdarstellung der Vorrichtung in Seitenansicht.

Elemente gleicher Konstruktion oder Funktion sind figurenübergreifend mit den gleichen Bezugszeichen gekennzeichnet.

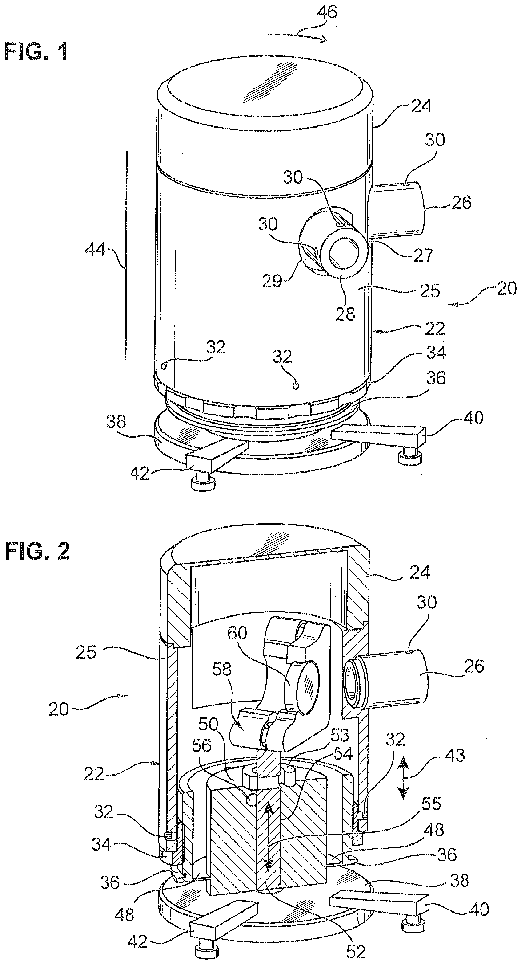

Figur 1 zeigt eine Vorrichtung 20 mit einem Laserschutzgehäuse 22. Das Laserschutzgehäuse 22 weist einen Deckel 24, eine Laserschutzabdeckung 25 und einen Trägerkörper 36 auf. Die Laserschutzabdeckung 25 hat eine erste Ausnehmung 27 mit einem ersten Anschluss 26 zur Aufnahme eines nicht dargestellten ersten Laserschutzrohrs und eine zweite Ausnehmung 29 mit einem zweiten Anschluss 28 zur Aufnahme eines nicht dargestellten zweiten Laserschutzrohrs. Ansonsten ist das Laserschutzgehäuse 22 lichtdicht ausgebildet. Die Laserschutzrohre können mit Hilfe von ersten Feststellschrauben 30 an den beiden Anschlüssen 26, 28 festgelegt werden. Mit Hilfe der Laserschutzrohre kann ein Laserstrahl von einer Laserlichtquelle hin zu der Vorrichtung 20 und von der Vorrichtung 20 hin zu einer bezüglich der Laserlichtquelle und der Vorrichtung 20 externen Baueinheit, beispielsweise einem Mikroskop, gelenkt werden.

Die Laserschutzabdeckung 25 ist mit Hilfe von zweiten Feststellschrauben 32 an einem Stellrad 34 festgelegt. Das Stellrad 34 ist über ein Innengewinde des Stellrads 34 und ein Außengewinde des Trägerkörpers 36 mit dem Trägerkörper 36 gekoppelt. Der Trägerkörper 36 ist über eine Bodenplatte 38 mit einer ersten Schraubklemme 40 und einer zweiten Schraubklemme 42 gekoppelt. Alternativ oder zusätzlich können nur eine oder mehrere Schraubklemmen angeordnet sein. Die beiden Schraubklemmen 40, 42 ermöglichen ein Fixieren der Vorrichtung 20 an einem nicht dargestellten optischen Tisch. Zusätzlich oder alternativ zu den Schraubklemmen 40, 42 können in der Bodenplatte 38 nicht dargestellte Magnete angeordnet sein, die an entsprechende Magnete in dem optischen Tisch gekoppelt werden können. Die Magnete ermöglichen ein einfaches Ausrichten der Vorrichtung 20 auf dem optischen Tisch und erleichtern die Positionierung der Vorrichtung 20 auf dem optischen Tisch. Das Laserschutzgehäuse 22 ist aufgrund einer äußeren Krafteinwirkung gegenüber einer Vertikalen 44 in einer Kipprichtung 46 verkippt.

Figur 2 zeigt eine perspektivische Schnittdarstellung durch die Vorrichtung 20 gemäß Figur 1 aus der hervorgeht, dass das Verkippen des Laserschutzgehäuses 22 aufgrund eines flexiblen Elements 48 möglich ist, das den Trägerkörper 36 des Laserschutzgehäuses 22 mit einem Sockel 50 verbindet. Der Sockel 50 hat eine vertikale Ausnehmung 54 in der zumindest teilweise eine Trägersäule 52 einer Halterung angeordnet ist. Ein Stellring 53 ermöglicht das vertikale Verstellen der Trägersäule 52 entlang einer vertikalen Bewegungsrichtung 55 in der vertikalen Ausnehmung 54. Ein Feststellstift 56 trägt dazu bei, die Trägersäule 52 in vertikaler Richtung festzulegen. Die Halterung hält ein optisches Element. Die Halterung ist eine Spiegelhalterung 58 und das optische Element ist ein Umlenkspiegel 60. Alternativ dazu kann die Halterung eine Linsenhalterung sein, die eine oder mehrere nicht dargestellte Linsen hält.

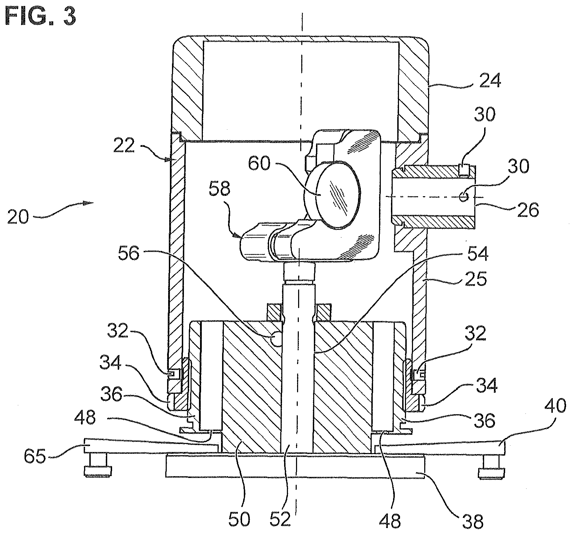

Figur 3 zeigt eine Seitenansicht der Schnittdarstellung gemäß Figur 2, wobei zusätzlich zu der in Figur 2 gezeigten Darstellung eine dritte Schraubklemme 65 zum Festlegen der Vorrichtung 20 an dem optischen Tisch gezeigt ist.

Das Laserschutzgehäuse 22 schützt das für dieses Beispiel als Umlenkspiegel 60 ausgebildete optische Element vor einer äußeren Kraft- und/oder Temperatureinwirkung. Gleichzeitig schützt das Laserschutzgehäuse 22 die Umgebung der Vorrichtung 20 vor Laserstrahlen, die mit Hilfe des Umlenkspiegels 60 umgelenkt werden. Zusätzlich schützt das Laserschutzgehäuse 22 den Umlenkspiegel 60 vor Zugriff und Dejustierung. Der Deckel 24 ermöglicht einen Zugriff auf die Spiegelhalterung 58 und damit eine Justage des Umlenkspiegels 60 auch nach der Montage des Laserschutzgehäuses 22, insbesondere der Laserschutzabdeckung 25. Beispielsweise kann eine Feinjustage der Spiegelhalterung 58 nach Aufsetzen der Laserschutzabdeckung 25 und vor Aufsetzen des Deckels 24 erfolgen.

Das in den Figuren gezeigte flexible Element 48 erhält seine Flexibilität durch die im Querschnitt blattartige, also besonders dünne, Ausbildung des für das flexible Element 48 verwendeten Materials. Das flexible Element 48 ist derart dünn ausgebildet, dass ein Verkippen des Laserschutzgehäuses 22 möglich ist, ohne dass ein relevanter Kraftübertrag auf den Sockel 50 und damit auf die Spiegelhalterung 58 und den Umlenkspiegel 60 erfolgt. Alternativ oder zusätzlich kann die Flexibilität des flexiblen Elements 48 durch eine im Profil wellenförmige Ausbildung des flexiblen Elements 48 gegeben sein.

In dem gezeigten Ausführungsbeispiel sind der Sockel 50, das flexible Element 48 und der Trägerkörper 36 des Laserschutzgehäuses 22 einstückig ausgebildet. Somit bilden der Sockel 50, das flexible Element 48 und der Trägerkörper 36 einen Teil des Laserschutzgehäuses 22. Insbesondere sind der Sockel 50, das flexible Element 48 und der Trägerkörper 36 aus einem einstückigen Aluminium- oder Kunststoffkörper ausgefräst. Ferner sind der Sockel 50 und die Bodenplatte 38 einstückig ausgebildet. Alternativ dazu können der Sockel 50, der Trägerkörper 36 und das flexible Element 48 in einem Spritzgussverfahren und/oder aus Metall hergestellt sein.

Die Spiegelhalterung 58 ermöglicht eine Justierung des Umlenkspiegels 60. Dabei wird der Umlenkspiegel 60 an eine Strahlhöhe und eine vorzunehmende Strahlumlenkung des umzulenkenden Laserstrahls angepasst. Das Stellrad 34 ermöglicht eine vertikale Justierung der Laserschutzabdeckung 25 auch nach Justierung des Umlenkspiegels 60 und bei geschlossenem Deckel 24. Insbesondere führt ein Drehen des Stellrads 34 zu einer Bewegung der Laserschutzabdeckung 25 und damit der Anschlüsse 26, 28 entlang der Bewegungsrichtung 43. Die vertikale Position der Laserschutzabdeckung 22 kann somit an die vertikale Position des Umlenkspiegels 60 und/oder an eine vertikale Position der anzuschließenden Laserschutzrohre angepasst werden. Eine seitliche Ausrichtung der Laserschutzabdeckung 25 und damit eine seitliche Justierung gemäß dem umzulenkenden Laserstrahl erfolgt durch Lösen der zweiten Feststellschrauben 32, Drehen der Laserschutzabdeckung 25 und anschließendem Anziehen der zweiten Feststellschrauben 32.

Die Schraubklemmen 40, 42, 65 greifen vorzugsweise in nicht dargestellte Löcher des optischen Tisches oder einer nicht dargestellten optischen Bank ein. Die Laserschutzabdeckung 25 kann derart ausgebildet sein, dass sie zusätzlich zu den beschriebenen Schutzfunktionen den Stellring 53 festlegt und somit zusätzlich oder alternativ zu dem Festestellstift 56 die vertikale Position der Trägersäule 52 und damit der gesamten Spiegelhalterung 58 festlegt.

Die Erfindung ist nicht auf die angegebenen Ausführungsbeispiele beschränkt. Beispielsweise kann das optische Element aus einer Spiegel-Linsen-Kombination bestehen.

### Bezugszeichenliste:

- 20: Vorrichtung
- 22: Laserschutzgehäuse
- 24: Deckel
- 25: Laserschutzabdeckung
- 26: erster Anschluss
- 27: erste Ausnehmung
- 28: zweiter Anschluss
- 29: zweite Ausnehmung
- 30: erste Feststellschrauben
- 32: zweite Feststellschrauben
- 34: Stellrad
- 36: Trägerkörper
- 38: Bodenplatte
- 40: erste Schraubklemme
- 42: zweite Schraubklemme
- 43: Bewegungsrichtung Laserschutzgehäuse
- 44: Vertikale
- 46: Kipprichtung
- 48: flexibles Element
- 50: Sockel
- 52: Trägersäule
- 53: Stellrad
- 54: vertikal erstreckende Ausnehmung
- 55: Bewegungsrichtung Trägersäule
- 56: Feststellstift
- 58: Spiegelhalterung
- 60: Umlenkspiegel
- 65: dritte Schraubklemme

## Patentansprüche

1. Vorrichtung zum Laserschutz,
mit einer Halterung (58), die ein optisches Element (60) hält,
einem Sockel (50), der die Halterung (58) hält,
und mit einem Laserschutzgehäuse (22), das im Wesentlichen lichtdicht ausgebildet ist,
das Laserschutzgehäuse (22) einen Trägerkörper (36) und eine von dem Trägerkörper (36) gehaltene Laserschutzabdeckung (25) umfasst,
das Laserschutzgehäuse (22) über ein flexibles Element (48) so mit dem Sockel (50) gekoppelt ist, dass das Laserschutzgehäuse (22) relativ zu dem Sockel (50) verkippbar ist,
wobei die Flexibilität des flexiblen Elements (48) aufgrund der Geometrie des flexiblen Elements (48) gegeben ist, und wobei
der Trägerkörper (36), das flexible Element (48) und der Sockel (50) einstückig ausgebildet sind.

2. Vorrichtung nach Anspruch 1,
bei der die Halterung eine Spiegelhalterung (58) ist und bei der das optische Element ein Umlenkspiegel (60) ist.

3. Vorrichtung nach einem der vorhergehenden Ansprüche,
bei der der Trägerkörper (36) und die Laserschutzabdeckung (25) über ein Stellrad (34) mechanisch miteinander gekoppelt sind und bei der eine relative vertikale Position der Laserschutzabdeckung (25) in Bezug auf den Sockel (50) durch eine Stellung des Stellrads (34) vorgegeben ist.

4. Vorrichtung nach einem der vorstehenden Ansprüche,
bei der das Laserschutzgehäuse (22) einen abnehmbaren Deckel (24) umfasst, der das Laserschutzgehäuse (22) auf einer von dem Sockel (50) abgewandten Seite des Laserschutzgehäuses (22) in vertikaler Richtung abschließt.

5. Vorrichtung nach einem der vorstehenden Ansprüche,
bei der der Sockel (50) eine sich vertikal erstreckende Ausnehmung (54) umfasst und bei der die Spiegelhalterung (58) eine Trägersäule (52) umfasst, die vertikal bewegbar zumindest teilweise in der sich vertikal erstreckenden Ausnehmung (54) angeordnet ist.

6. Vorrichtung nach einem der vorstehenden Ansprüche,
die zumindest eine Schraubklemme (40, 42) umfasst, über die der Sockel (50) an einem ortsfesten Körper befestigt ist.

7. Vorrichtung nach einem der vorhergehenden Ansprüche,
bei der das flexible Element (48) im Querschnitt wellenförmig und/oder blattartig ausgebildet ist.

8. Vorrichtung nach einem der vorstehenden Ansprüche,
bei der die Flexibilität des flexiblen Elements (48) aufgrund des Materials des flexiblen Elements (48) gegeben ist.

9. Vorrichtung nach Anspruch 7,
bei der das flexible Element (48) Kunststoff und/oder Gummi umfasst.

10. Vorrichtung nach einem der vorstehenden Ansprüche,
bei der das Laserschutzgehäuse (22) eine erste Ausnehmung (27) zum Anschließen eines ersten Laserschutzrohres und eine zweite Ausnehmung (29) zum Anschließen eines zweiten Laserschutzrohres aufweist.

11. Vorrichtung nach Anspruch 10,
bei der zum Anschließen des ersten Laserschutzrohres an der ersten Ausnehmung (27) ein erster Anschluss (26) an dem Laserschutzgehäuse (22) angeordnet ist und bei der zum Anschließen des zweiten Laserschutzrohres an der zweiten Ausnehmung (29) an dem Laserschutzgehäuse (22) ein zweiter Anschluss (28) angeordnet ist.

## Claims

1. Device for laser protection,
with a holder (58), which holds an optical element (60),
with a base (50), which holds the holder (58), and with a laser protection housing (22), which is substantially light-tight,
the laser protection housing (22) comprises a carrier body (36) and a laser protection cover (25) held by the carrier body (36),
the laser protection housing (22) is coupled to the base (50) via a flexible element (48), such that the laser protection housing (22) is tiltable relative to the base (50),
wherein the flexibility of the flexible element (48) is provided by the geometry of the flexible element (48), and wherein
the carrier body (36), the flexible element (48) and the base (50) are formed in one piece.

2. Device according to Claim 1,
in which the holder is a mirror holder (58), and in which the optical element is a deflection mirror (60).

3. Device according to one of the preceding claims, in which the carrier body (36) and the laser protection cover (25) are coupled mechanically to each other via an adjustment wheel (34), and in which a relative vertical position of the laser protection cover (25) in relation to the base (50) is predefined by a position of the adjustment wheel (34).

4. Device according to one of the preceding claims, in which the laser protection housing (22) comprises a removable lid (24), which closes the laser protection housing (22) in the vertical direction at an end of the laser protection housing (22) directed away from the base (50).

5. Device according to one of the preceding claims, in which the base (50) comprises a vertically extending recess (54), and in which the mirror holder (58) comprises a supporting column (52), which is arranged to be vertically movable, at least in part, in the vertically extending recess (54).

6. Device according to one of the preceding claims, which device comprises at least one screw clamp (40, 42), via which the base (50) is secured on a stationary body.

7. Device according to one of the preceding claims, in which the flexible element (48) is formed with a wave-shaped and/or sheet-like cross section.

8. Device according to one of the preceding claims, in which the flexibility of the flexible element (48) is provided by the material of the flexible element (48).

9. Device according to Claim 7,
in which the flexible element (48) comprises plastic and/or rubber.

10. Device according to one of the preceding claims, in which the laser protection housing (22) has a first recess (27) for attachment of a first laser protection tube, and a second recess (29) for attachment of a second laser protection tube.

11. Device according to Claim 10,
in which, in order to attach the first laser protection tube to the first recess (27), a first connector nozzle (26) is arranged on the laser protection housing (22), and in which, in order to attach the second laser protection tube to the second recess (29), a second connector nozzle (28) is arranged on the laser protection housing (22).

## Revendications

1. Dispositif de protection au laser,
comprenant un support (58) qui maintient un élément optique (60),
un socle (50) qui maintient le support (58),
et comprenant un boîtier de protection au laser (22) qui est configuré sensiblement opaque,
le boîtier de protection au laser (22) comporte un corps porteur (36) et un cache de protection au laser (25) maintenu par le corps porteur (36),
le boîtier de protection au laser (22) est couplé au socle (50) par le biais d'un élément flexible (48) de telle sorte que le boîtier de protection au laser (22) peut basculer par rapport au socle (50),
la souplesse de l'élément flexible (48) étant définie du fait de la forme géométrique de l'élément flexible (48), et
le corps porteur (36), l'élément flexible (48) et le socle (50) étant réalisés d'une seule pièce.

2. Dispositif selon la revendication 1, avec lequel le support est un support de miroir (58) et avec lequel l'élément optique est un miroir de renvoi (60).

3. Dispositif selon l'une des revendications précédentes, avec lequel le corps porteur (36) et le cache de protection au laser (25) sont couplés mécaniquement l'un à l'autre par le biais d'une roue de réglage (34) et avec lequel une position verticale relative du cache de protection au laser (25) par rapport au socle (50) est prédéfinie par une position de la roue de commande (34).

4. Dispositif selon l'une des revendications précédentes, avec lequel le boîtier de protection au laser (22) comprend un couvercle (24) amovible qui ferme le boîtier de protection au laser (22) dans le sens vertical sur un côté du boîtier de protection au laser (22) à l'opposé du socle (50).

5. Dispositif selon l'une des revendications précédentes, avec lequel le socle (50) comprend une cavité (54) qui s'étend verticalement et avec lequel le support de miroir (58) comprend une colonne porteuse (52) qui est disposée avec mobilité verticale au moins partielle dans la cavité (54) qui s'étend verticalement.

6. Dispositif selon l'une des revendications précédentes, lequel comprend au moins une pince à visser (40, 42) par le biais de laquelle le socle (50) est fixé sur un corps en position fixe.

7. Dispositif selon l'une des revendications précédentes, avec lequel l'élément flexible (48) présente une section transversale de configuration ondulée et/ou à la manière d'une feuille.

8. Dispositif selon l'une des revendications précédentes, avec lequel la souplesse de l'élément flexible (48) est définie du fait du matériau de l'élément flexible (48).

9. Dispositif selon la revendication 7, avec lequel l'élément flexible (48) comprend une matière plastique et/ou du caoutchouc.

10. Dispositif selon l'une des revendications précédentes, avec lequel le boîtier de protection au laser (22) possède une première cavité (27) destinée au raccordement d'un premier tube de protection au laser et une deuxième cavité (29) destinée au raccordement d'un deuxième tube de protection au laser.

11. Dispositif selon la revendication 10, avec lequel un premier raccord (26) est disposé sur le boîtier de protection au laser (22) pour le raccordement du premier tube de protection au laser à la première cavité (27) et avec lequel un deuxième raccord (28) est disposé sur le boîtier de protection au laser (22) pour le raccordement du deuxième tube de protection au laser à la deuxième cavité (29).
